# EUROPÄISCHE PATENTANMELDUNG

(11) **EP 0 799 633 A1**
(43) Veröffentlichungstag der Anmeldung: **08.10.1997**
(21) Anmeldenummer: 96112390.8
(22) Anmeldetag: 31.07.1996
(51) Int. Cl.: B01D 53/04

(54) **Verfahren und Vorrichtung zur Entfernung von Kohlenmonoxid und/oder Wasserstoff aus einem Luftstrom**

(30) Priorität: 04.04.1996 DE 19613646; 04.04.1996 DE 19613647
(71) Anmelder: Linde Aktiengesellschaft, 65189 Wiesbaden (DE)
(72) Erfinder: von Gemmingen, Ulrich, Dr. Dipl.-Phys., 80803 München (DE)

(57) **Zusammenfassung**

Bei dem Verfahren und der Vorrichtung wird Kohlenmonoxid und/oder Wasserstoff werden aus einem Luftstrom durch katalytische Oxidation entfernt. Die Aktivität des Katalysators wird dadurch erhöht, daß stromaufwärts der katalytischen Oxidation oxidierende und/oder reduzierende Luftschadstoffe und/oder ungesättigte Kohlenwasserstoffe aus dem Luftstrom entfernt werden. Alternativ oder zusätzlich wird in einer Regenerierphase ein Regenerierfluid, das einen Sauerstoffgehalt von 0,5 bis 80 Vol% aufweist, über das katalytische Material geleitet.

## Beschreibung

Die Erfindung betrifft ein Verfahren und eine Vorrichtung zur Entfernung von Kohlenmonoxid und/oder Wasserstoff aus einem Luftstrom durch katalytische Oxidation.

Es ist bekannt, beispielsweise aus der Ansaugluft von Luftzerlegern Verunreinigungen wie Kohlenmonoxid und Wasserstoff durch eine katalytische Oxidation von Kohlenmonoxid zu Kohlendioxid und/oder Wasserstoff zu Wasser an Katalysatorschichten zu entfernen. Das Katalysatormaterial kann aus Hopcalit (Gemisch von Oxiden und/oder Peroxiden von Mangan, Silber, Kobalt und/oder Kupfer) bestehen, oder aus einer Schüttung von Aluminiumoxid, in das Palladium oder Platin oder auch Ruthenium, Osmium, Iridium, oder Rhodium implementiert ist.

Beispiele für die Erzeugung Reinigung von Einsatzluft für eine Luftzerlegungsanlage für die Erzeugung eines ultrareinen Gases finden sich in der EP-0 438 282-A1 und der EP-0 454 531-A1. Gemäß EP-0 438 282-A1 wird aus dem Einsatzluftstrom zunächst durch Adsorption Wasser entfernt; danach werden in je einer Schicht Hopcalits und Palladium-aktivierten Aluminiumoxids Kohlenmonoxid und Wasserstoff bei Umgebungstemperaturen von 0 bis 50°C umgewandelt und schließlich werden Restwasser, Kohlendioxid und Kohlenwasserstoffe adsorptiv entfernt. Mit den bekannten Verfahren sind typischerweise Abreicherungen von Kohlenmonoxid und Wasserstoff um einen Faktor 20 möglich.

Der Erfindung liegt die Aufgabe zugrunde, ein Verfahren und eine Vorrichtung der eingangs genannten Art anzugeben, die einen besonders hohen Abreicherungsgrad an Kohlenmonoxid und/oder Wasserstoff im Luftstrom bewirken. Diese Erhöhung der Katalysatoraktivität wird im Rahmen der Erfindung durch zwei Maßnahmen bewirkt, die jeweils einzeln oder in Kombination verwirklicht werden können.

Diese Aufgabe wird in einer ersten Variante der Erfindung dadurch gelöst, daß stromaufwärts der katalytischen Oxidation oxidierende und/oder reduzierende Luftschadstoffe und/oder ungesättigte Kohlenwasserstoffe aus dem Luftstrom entfernt werden. Derartige störende Komponenten werden um einen Faktor von beispielsweise mehr als 20, vorzugsweise mehr als 50, höchst vorzugsweise etwa 100 vermindert.

Bei diesen Stoffen handelt es sich insbesondere um folgende Verbindungen, die in - je nach Luftverschmutzung - unterschiedlichen Mengen in der atmosphärischen Luft enthalten sind:
a) Stickoxide (NOₓ) wie NO, NO₂, N₂O
b) Schwefelverbindungen wie SO₂, SO₃₊, COS, H₂S
c) Kohlenwasserstoffe wie C₂H₂, C₃H₆, C₄H₈, C₄₊
d) HCl sowie chlorierte und fluorierte Kohlenwasserstoffe
e) H₂O₂

Mindestens einer, vorzugsweise mehrere dieser Stoffe werden gemäß der Erfindung dem Luftstrom vor der katalytischen Oxidation entzogen. Im Rahmen der Erfindung hat sich nämlich herausgestellt, daß mit Hilfe dieser Maßnahme die Aktivität der katalytisch wirkenden Oberflächen nachhaltig erhöht wird, so daß Abreicherungsgrade an Kohlenmonoxid und/oder Wasserstoff von weit über 100, beispielsweise bis zu 10⁵, erreicht werden können. Damit läßt sich der Restgehalt an Kohlenmonoxid und/oder Wasserstoff auf Werte unter 100 VppT (= 10⁻¹⁰ auf das Volumen bezogen), beispielsweise 50 VppT, bringen. Die Schichtdicke der katalytisch aktiven Schicht kann dabei sehr gering gehalten werden und damit auch der apparative und betriebstechnische Aufwand in Form von Material-, Behälter und Energiekosten.

Vorzugsweise sind der katalytischen Oxidation mindestens zwei oder mindestens drei Adsorptionsschichten vorgeschaltet, von denen mindestens jeweils eine Wasserdampf oder einen der in Anspruch 1 genannten unerwünschten Stoffe enthält.

Die Entfernung der oxidierenden und/oder reduzierenden Luftschadstoffe und/oder der ungesättigten Kohlenwasserstoffe kann durch Kontakt mit adsorbierenden Material, insbesondere mit Alugel, Silicagel und/oder einem Molekularsieb durchgeführt werden. Es kann sich um ein oder mehrere Adsorptionsbetten zur Schadstoffentfernung handeln. Die Adsorptionslaufzeit bis zur Regenerierung und die Schichtdicke müssen jedoch so gewählt werden, daß die besagten Schadstoffe in jeder Betriebsphase entfernt werden.

Silicagel ist besonders geeignet zur Entfernung von NOₓ, H₂O₂ sowie Schwefel-, Chlor- und Fluorverbindungen. Die Molekularsiebe 5A und 13X eignen sich besonders für die Entfernung ungesättigter und höherer Kohlenwasserstoffe. 13X kann gleichzeitig für die Entfernung von Wasser genutzt werden. Zur Entfernung von N₂O kann ein Molekularsieb eingesetzt werden, das zur Verbesserung der Stickstoffadsorption modifiziert ist, insbesondere durch einen erhöhten Ca-Gehalt nach Na-Ca-lonenaustausch.

Die Vorrichtung, in der eine katalytische Oxidation der eingangs genannten Art durchgeführt wird, wird üblicherweise zyklisch betrieben und dabei in Abständen regeneriert. Dazu sind in der Regel mindestens zwei identische Teilvorrichtungen vorhanden, die abwechselnd mit dem Luftstrom beziehungsweise mit einem Regenerierfluid beschickt werden. Diese können häufig zusätzlich zur Oxidationsstufe auch Adsorptionsstufen zur Entfernung von Wasserdampf, Kohlendioxid, Luftschadstoffen und ähnlichem enthalten.

In einer zweiten Variante der Erfindung wird die oben beschriebene Aufgabe dadurch gelöst, daß das Regenerierfluid, das in einer Regenerierphase über das katalytische Material geleitet wird, einen Sauerstoffgehalt von 0,5 bis 80 Vol% aufweist. Vorzugsweise liegt der Sauerstoffgehalt unter 40 Vol%, höchst vorzugsweise unter 35 Vol% und/oder über 1 Vol%, höchst vorzugsweise über 5 Vol%.

Bisher hatte man erwartet, daß ein sauerstoffhaltiges Fluid als Regenerierfluid ungeeignet ist, da es Metall- und oder Edelmetalloxiden auf dem Katalysatormaterial bildet. Im Rahmen der Erfindung hat sich überraschenderweise herausgestellt, daß diese Wirkung beim Einsatz eines Regeneriergases mit mäßigem Sauerstoffgehalt nicht oder nicht in wesentlichen Maße eintritt. Eine Verminderung der Aktivität des katalytischen Materials wird daher nicht bewirkt; im Gegenteil, bei oxidhaltigen Katalysatoren wie Hopcalit erhöht ein mäßiger Sauerstoffgehalt im Regeneriergas sogar die Aktivität des Oxidationskatalysators. Dies ist vermutlich dadurch zu erklären, daß sich das Katalysatormaterial im Laufe der Zeit an Sauerstoff verarmt. Diese chemische Veränderung kann dann mit Hilfe des sauerstoffhaltigen Regenerierfluids rückgängig gemacht werden.

Im Rahmen der Erfindung kann außerdem auf die Verwendung von Reinprodukten (z.B. Stickstoff) als Regenerierfluid verzichtet werden, so daß insgesamt eine hohe Wirtschaftlichkeit, insbesondere eine hohe Ausbeute an Reinprodukt, erreicht wird. Besonders günstig ist es, beide Varianten der Erfindung zu kombinieren, das heißt sowohl stromaufwärts der katalytischen Oxidation oxidierende und/oder reduzierende Luftschadstoffe und/oder ungesättigte Kohlenwasserstoffe aus dem Luftstrom zu entfernen als auch ein Regenerierfluid einzusetzen, das einen Sauerstoffgehalt von 0,5 bis 80 Vol% aufweist. Damit ergibt sich eine besonders hohe Aktivität des Katalysators.

Vorzugsweise weist das Regenerierfluid eine Temperatur von 180°C oder weniger, beispielsweise von 25 bis 200°C auf. Bei Einhaltung der genannten Obergrenze kann die insbesondere bei Edelmetall- und Metallkatalysatoren störende Oxidbildung besonders wirksam verhindert werden.

Die Regeneriertemperatur kann beispielsweise zwischen 25 und 180°C liegen. Bei Sauerstoffgehalten von 20 bis 35 Vol% sollten beim Regenerieren Temperaturen von 160°C nicht überschritten werden. Bei geringerem Sauerstoffkonzentrationen sind auch geringfügig höhere Regeneriertemperaturen, beispielsweise bis 200°C möglich.

Der Luftstrom wird vorzugsweise stromabwärts der katalytischen Oxidation einem Reinigungsschritt zur Entfernung von Wasser und/oder Kohlendioxid unterworfen wird. Dabei werden insbesondere die bei der katalytischen Oxidation erzeugten Anteile an Wasser und/oder Kohlendioxid entfernt, beispielsweise durch Adsorption. Adsorptives und katalytisches Material können im selben Behälter angeordnet sein und durch das gleiche Regenerierfluid regeneriert werden.

Zur Erzielung der hohen Aktivität ist es günstig, wenn die katalytische Oxidation, insbesondere die katalytische Oxidation von Wasserstoff, an einem Katalysator durchgeführt wird, der edelmetalldotiertes Trägermaterial aufweist, wobei die Edelmetalldotierung des Trägermaterials mindestens 0,5 Gew% betragen soll und/oder die Korngröße des Trägermaterials kleiner als 1,8 mm ist.

Selbst bei verhältnismäßig kurzen katalytischen Gesamtschichtdicken von unter 300 mm (z.B. 200 oder 250 mm) und Luftgeschwindigkeiten von 0,05 bis 0,2 m/s gelingt es damit im Rahmen der Erfindung, Wasserstoff- und Kohlenmonoxid-Abreicherungsgrade von 1:10⁻⁵ zu erreichen.

Die Erfindung betrifft auch eine Vorrichtung zur Entfernung von Kohlenmonoxid und/oder Wasserstoff aus einem Luftstrom durch katalytische Oxidation gemäß den Patentansprüchen 8 bis 10.

Die Erfindung betrifft außerdem eine Anwendung des Verfahrens und/oder der Vorrichtung in einem Verfahren und/oder einer Vorrichtung zur Gewinnung eines Reinprodukts aus einem Luftstrom gemäß den Patentansprüchen 14 bis 16, wobei der Luftstrom stromabwärts der katalytischen Oxidation beziehungsweise stromabwärts des Reinigungsschritts zur Entfernung von Wasser und/oder Kohlendioxid einer Tieftemperaturzerlegung zur Abtrennung des Reinprodukts zugeführt wird. Damit kann insbesondere hochreiner Stickstoff mit einem Verunreinigungsgehalt von weniger als 100 Vppb an reduzierenden Komponenten erzeugt werden. Beispielsweise kann das Stickstoffprodukt weniger als 1 Vppb Wasserstoff und Kohlenmonoxid enthalten.

Im folgenden wird die Erfindung anhand eines Ausführungsbeispiels näher erläutert.

Ein Luftstrom ist mit folgenden Verunreinigungen belastet:
- H₂:: 0,8 Vppm
- CO:: 1,2 Vppm
- NO₂:: 0,1 Vppm
- N₂O:: 0,3 Vppm
- C₂H₂:: 0,3 Vppm
- C₂H₄:: 0,4 Vppm
- C₃H₆:: 0,2 Vppm
- H₂S:: 0,05 Vppm
- HCl:: 0,06 Vppm

Dieser Luftstrom tritt unter einem Druck von 6 bar und mit einer Temperatur von 20°C in eine Reinigungseinheit ein, die zwei identische Behälter mit Adsorbens- und Katalysatorfüllung enthalten und mit einer Taktzeit von 3,5 h wechselweise betrieben und regeneriert werden.

Jeder dieser Behälter weist einen Durchmesser von 1,3 m und eine Schüttung einer Gesamthöhe von 1,2 m auf. Die Schüttung wird vom Luftstrom von unten nach oben durchströmt und weist von unten nach oben folgende Schichten auf (in Klammern ist jeweils die Hauptwirkung der entsprechenden Schicht angegeben):
1. Silicagel (Entfernung von HCl, NO₂, H₂S, H₂O)
2. Molekularsieb 13X (Entfernung von H₂O, H₂S, C₂-/C₃-Kohlenwasserstoffen)
3. Molekularsieb 5A (Ca-Typ; Entfernung von N₂O)
4. Hopcalit (CO-Umwandlung)
5. Aluminiumoxid mit 0,5 % Pd (H₂-Umwandlung und H₂O-Adsorption)
6. Molekularsieb 13X (Entfernung von CO₂)

Vor dem Eintritt in die erste katalytisch wirksame Schicht (Hopcalit) enthält der Luftstrom außer Edelgasen nur noch Stickstoff, Sauerstoff, Wasserstoff und CO und noch etwa 300 Vppm CO₂. Am Austritt des Behälters, der sich im Betriebstakt befindet sind die Verunreinigungen im Luftstrom auf die folgenden Werte reduziert:
- H₂:: < 80 VppT
- CO:: < 50 VppT
- NO₂:: < 0,1Vppb
- N₂O:: < 3 Vppb
- C₂H₂:: < 1 Vppb
- C₂H₄:: < 1 Vppb
- C₃H₆:: < 1 Vppb
- H₂S:: < 0,1 Vppb
- HCl:: < 0,1 Vppb

Der andere Behälter befindet sich in der Regenerierphase und wird von einem Regeneriergas durchströmt, das aus 69 % Stickstoff und 31 % Sauerstoff besteht und Atmosphärendruck aufweist. Während des ersten Drittes des Regeneriertakts (Heizzeit) wird eine Regeneriergasmenge, die 27 mol% der Luftmenge entspricht und auf 150°C aufgeheizt wurde, durch den Behälter geführt. Während der restlichen zwei Drittel (Kaltspülzeit) wird die Menge auf 30 mol% der Luftmenge erhöht und die Temperatur auf 25°C abgesenkt.

## Patentansprüche

1. Verfahren zur Entfernung von Kohlenmonoxid und/oder Wasserstoff aus einem Luftstrom durch katalytische Oxidation, dadurch gekennzeichnet, daß stromaufwärts der katalytischen Oxidation oxidierende und/oder reduzierende Luftschadstoffe und/oder ungesättigte Kohlenwasserstoffe aus dem Luftstrom entfernt werden.

2. Verfahren nach Anspruch 1, dadurch gekennzeichnet, daß die Entfernung der oxidierenden und/oder reduzierenden Luftschadstoffe und/oder der ungesättigten Kohlenwasserstoffe durch Kontakt mit adsorbierenden Material, insbesondere mit Alugel, Silicagel und/oder einem Molekularsieb durchgeführt wird.

3. Verfahren zur Entfernung von Kohlenmonoxid und/oder Wasserstoff aus einem Luftstrom durch katalytische Oxidation, bei dem in einer Beladungsphase der Luftstrom und in einer Regenerierphase ein Regenerierfluid über das katalytische Material geleitet wird, dadurch gekennzeichnet, daß das Regenerierfluid einen Sauerstoffgehalt von 0,5 bis 80 Vol% aufweist.

4. Verfahren nach Anspruch 1 oder 2, bei dem in einer Beladungsphase der Luftstrom und in einer Regenerierphase ein Regenerierfluid über das katalytische Material geleitet wird, dadurch gekennzeichnet, daß das Regenerierfluid einen Sauerstoffgehalt von 0,5 bis 80 Vol% aufweist.

5. Verfahren nach Anspruch 3 oder 4, dadurch gekennzeichnet, daß das Regenerierfluid eine Temperatur von 200°C oder weniger aufweist.

6. Verfahren nach einem der Ansprüche 1 bis 5, dadurch gekennzeichnet, daß der Luftstrom stromabwärts der katalytischen Oxidation einem Reinigungsschritt zur Entfernung von Wasser und/oder Kohlendioxid unterworfen wird.

7. Verfahren nach einem der Ansprüche 1 bis 6, dadurch gekennzeichnet, daß die katalytische Oxidation an einem Katalysator durchgeführt wird, der edelmetalldotiertes Trägermaterial aufweist, wobei die Edelmetalldotierung des Trägermaterials mindestens 0,5 Gew% beträgt und/oder die Korngröße des Trägermaterials kleiner als 1,8 mm ist.

8. Verfahren nach einem der Ansprüche 1 bis 7, dadurch gekennzeichnet, daß die katalytische Oxidation an einem Katalysator durchgeführt wird, der Oxide und/oder Peroxide von Mangan, Silber, Kobalt und/oder Kupfer enthält.

9. Vorrichtung zur Entfernung von Kohlenmonoxid und/oder Wasserstoff aus einem Luftstrom mit Mitteln zur katalytischen Oxidation von Kohlenmonoxid und/oder Wasserstoff, dadurch gekennzeichnet, daß den Mitteln zur katalytischen Oxidation Mittel zur Entfernung oxidierender und/oder reduzierender Luftschadstoffe und/oder ungesättigter Kohlenwasserstoffe vorgeschaltet sind.

10. Vorrichtung zur Entfernung von Kohlenmonoxid und/oder Wasserstoff aus einem Luftstrom mit Mitteln zur katalytischen Oxidation von Kohlenmonoxid und/oder Wasserstoff und mit Mitteln zur Einleitung eines Regenerierfluids in die Mittel zur Entfernung von Kohlenmonoxid und/oder Wasserstoff, dadurch gekennzeichnet, daß die Mittel zur Einleitung eines Regenerierfluids mit einer Quelle für ein Regenerierfluid verbunden sind, das einen Sauerstoffgehalt von 0,5 bis 80 Vol% aufweist.

11. Vorrichtung nach Anspruch 10, dadurch gekennzeichnet, daß den Mitteln zur katalytischen Oxidation Mittel zur Entfernung oxidierender und/oder reduzierender Luftschadstoffe und/oder ungesättigter Kohlenwasserstoffe vorgeschaltet sind.

12. Vorrichtung nach Anspruch 10 oder 11, dadurch gekennzeichnet, daß die Mittel zur Einleitung eines Regenerierfluids eine Heizeinrichtung zur Erwärmung des Regenerierfluid auf eine Temperatur von 200°C oder weniger aufweisen.

13. Vorrichtung nach einem der Ansprüche 9 bis 12, dadurch gekennzeichnet, daß den Mitteln zur katalytischen Oxidation Mittel zur Entfernung von Wasser und/oder Kohlendioxid nachgeschaltet sind.

14. Vorrichtung nach einem der Ansprüche 9 bis 13, dadurch gekennzeichnet, daß die Mittel zur Entfernung oxidierender und/oder reduzierender Luftschadstoffe und/oder ungesättigter Kohlenwasserstoffe und/oder die Mittel zur Entfernung von Wasser und/oder Kohlendioxid im gleichen Behälter wie die Mitteln zur katalytischen Oxidation angeordnet sind.

15. Anwendung des Verfahrens nach einem der Ansprüche 1 bis 8 und/oder der Vorrichtung nach einem der Ansprüche 9 bis 14 in einem Verfahren und/oder einer Vorrichtung zur Gewinnung eines Reinprodukts aus einem Luftstrom, wobei der Luftstrom stromabwärts der katalytischen Oxidation beziehungsweise stromabwärts des Reinigungsschritts zur Entfernung von Wasser und/oder Kohlendioxid einer Tieftemperaturzerlegung zur Abtrennung des Reinprodukts zugeführt wird.

16. Anwendung des Verfahrens nach einem der Ansprüche 3 bis 8 und/oder der Vorrichtung nach einem der Ansprüche 9 bis 14 in einem Verfahren und/oder einer Vorrichtung zur Gewinnung eines Reinprodukts aus einem Luftstrom, wobei der Luftstrom stromabwärts der katalytischen Oxidation einer Tieftemperaturzerlegung zur Abtrennung des Reinprodukts zugeführt wird und bei dem das Regenerierfluid der Tieftemperaturzerlegung entnommen wird.

17. Anwendung nach Anspruch 15 oder 16, dadurch gekennzeichnet, daß in der Tieftemperaturzerlegung hochreiner Stickstoff erzeugt wird.
